# EUROPEAN PATENT SPECIFICATION

(11) **EP 4 284 658 B1**
(45) Date of publication and mention of the grant of the patent: **05.03.2025**
(21) Application number: 21707390.7
(22) Date of filing: 28.01.2021
(51) Int. Cl.: B60C 1/00, C08L 9/06, C08L 9/00, C08L 7/00, B32B 25/04

(54) **AN ARTICLE, IN PARTICULAR A TIRE**
ARTIKEL, INSBESONDERE REIFEN
ARTICLE, EN PARTICULIER UN PNEU

(43) Date of publication of application: 06.12.2023
(73) Proprietor: COMPAGNIE GENERALE DES ETABLISSEMENTS MICHELIN, 63000 Clermont-Ferrand (FR)
(72) Inventor: MAESAKA, Masayuki, Tokyo 163-1073 (JP)
(74) Representative: M.F.P. Michelin
(86) International application number: PCT/JP2021/002996
(87) International publication number: WO 2022/162823

(56) References cited:
- WO-A1-2020/158695
- WO-A1-2021/005718
- JP-A- 2002 079 807

## Description

### Technical Field

The field of the invention is that of articles, for example, tires, shoes or caterpillar tracks, in particular for tires.

### Background Art

For articles intended to contact with the ground, for example tires, the following patent literatures 1 and 2 disclose tires having treads with specific cap and under treads in order to reduce road noise which is noise generated by that the articles contact with the road ground.

A constant objective of manufacturers of the articles is further to improve reduce noise performance.

### Citation List

### Patent Literature

PTL 1: JP2002-079807
PTL 2: JP2002-240510

During the research, the inventor has discovered that an article having a laminate comprising at least two superposed portions comprising specific rubber compositions, which allows an improved road noise performance.

In the present description, unless expressly stated otherwise, all the percentages (%) indicated are percentages by weight (wt%).

The expression "elastomer matrix" is understood to mean, in a given composition, all of the elastomers present in said rubber composition.

The abbreviation "phr" signifies parts by weight per hundred parts by weight of the elastomer matrix in the considered rubber composition.

In the present description, unless expressly indicated otherwise, each Tg_{DSC} (glass transition temperature) is measured in a known way by DSC (Differential Scanning Calorimetry) according to Standard ASTM D3418-08.

Any interval of values denoted by the expression "between a and b" represents the range of values of more than "a" and of less than "b" (i.e. the limits a and b excluded) whereas any interval of values denoted by the expression "from a to b" means the range of values going from "a" to "b" (i.e. including the strict limits a and b).

The expression "based on" should be understood in the present application to mean a composition comprising the mixture(s), the product of the reaction of the various constituents used or both, some of the constituents being able or intended to react together, at least partly, during the various manufacturing phases of the composition, in particular during the vulcanization (curing).

### Summary of Invention

### Solution to Problem

A first aspect of the invention is an article intended to come into contact with the ground; and the article comprising a laminate comprising at least two superposed portions comprising a first portion (FP) made of a first rubber composition (FC), and a second portion (SP) made of a second rubber composition (SC), and the second portion (SP) positioned farther from the ground than the first portion (FP), wherein the rubber compositions (FC and SC) each is based on at least an elastomer matrix, a reinforcing filler, a plasticizing agent, and a sulfur-based vulcanization accelerator, wherein the amount in phr of the reinforcing filler in the second rubber composition (SC) is lower than that in the first rubber composition (FC), wherein the ratio of the amount in phr of the plasticizing agent to the reinforcing filler in the second rubber composition (SC) is higher than that in the first rubber composition (FC), and wherein the amount in phr of the sulfur-based vulcanization accelerator in the second rubber composition (SC) is lower than that in the first rubber composition (FC).

### Advantageous Effects of Invention

The article having the laminate comprising the portions comprising the specific rubber compositions allows an improved road noise performance.

Each of the below aspect(s), the embodiment(s), the instantiation(s), and the variant(s) including each of the preferred range(s), matter(s) or both may be applied to any one of the other aspect(s), the other embodiment(s), the other instantiation(s) and the other variant(s) of the invention unless expressly stated otherwise.

Each of the rubber compositions (FC and SC) of the laminate of the article according to the invention is based on an elastomer matrix.

Elastomer (or loosely "rubber", the two terms being regarded as synonyms) of the "diene" type is to be understood in a known manner as an (meaning one or more) elastomer derived at least partly (i.e. a homopolymer or a copolymer) from diene monomers (monomers bearing two carbon-carbon double bonds, conjugated or not).

These diene elastomers can be classified into two categories: "essentially unsaturated" or "essentially saturated". Generally, the expression "essentially unsaturated" is understood to mean a diene elastomer resulting at least in part from conjugated diene monomers having a content of units of diene origin (conjugated dienes) which is greater than 15% (molar %); thus it is that diene elastomers such as butyl rubbers or diene/α-olefin copolymers of the EPDM type do not fall under the preceding definition and may especially be described as "essentially saturated" diene elastomers (low or very low content of units of diene origin, always less than 15%). In the category of "essentially unsaturated" diene elastomers, the expression "highly unsaturated" diene elastomer is understood to mean in particular a diene elastomer having a content of units of diene origin (conjugated dienes) which is greater than 50%.

Although it applies to any type of diene elastomer, a person skilled in the art of articles (for example, tires) will understand that the invention is preferably employed with essentially unsaturated diene elastomers.

Given these definitions, the expression diene elastomer capable of being used in the compositions in accordance with the invention is understood in particular to mean:
(a) - any homopolymer obtained by polymerization of a conjugated diene monomer, preferably having from 4 to 12 carbon atoms;
(b) - any copolymer obtained by copolymerization of one or more conjugated dienes with one another or with one or more vinyl aromatic compounds preferably having from 8 to 20 carbon atoms.

The following are suitable in particular as conjugated dienes: 1,3-butadiene, 2-methyl-1,3-butadiene, 2,3-di(C₁-C₅ alkyl)-1,3-butadienes, such as, for example, 2,3-dimethyl-1,3-butadiene, 2,3-diethyl-1,3-butadiene, 2-methyl-3-ethyl-1 ,3-butadiene or 2-methyl-3-isopropyl-1 ,3-butadiene, an aryl-1,3-butadiene, 1,3-pentadiene or 2,4-hexadiene. The following, for example, are suitable as vinylaromatic compounds: styrene, ortho-, meta- or para-methylstyrene, the"vinyltoluene" commercial mixture, para-(tert-butyl) styrene, methoxystyrenes, chlorostyrenes, vinylmesitylene, divinylbenzene or vinylnaphthalene.

A second aspect of the invention is the article according to the first aspect, wherein at least one of the first rubber compositions (FC), the second rubber composition (SC) or combinations thereof is such that the elastomer matrix comprises at least one diene elastomer selected from the group consisting of polybutadienes (BR(s)), polyisoprenes, butadiene copolymers, isoprene copolymers and combinations thereof, preferably wherein the rubber compositions (FC and SC) each is such that the elastomer matrix comprises at least one diene elastomer selected from the group consisting of polybutadienes (BR(s)), polyisoprenes, butadiene copolymers, isoprene copolymers and combinations thereof.

According to a preferred embodiment of the second aspect, the copolymers are preferably selected from the group consisting of butadiene copolymers and combinations thereof, more preferably selected from the group consisting of styrene-butadiene copolymers (SBR), butadiene-isoprene copolymers (BIR), styrene-isoprene copolymers (SIR), styrene-butadiene-isoprene copolymers (SBIR) and combinations thereof, still more preferably selected from the group consisting of styrene-butadiene copolymers (SBR) and combinations thereof.

The diene elastomer may have any microstructure which depends on the polymerization conditions used, in particular on the presence or absence of a modifying agent, a randomizing agent or both and on the amounts of modifying agent, randomizing agent or both employed. This elastomer may, for example, be a block, statistical, sequential or micro sequential elastomer and may be prepared in dispersion or in solution. This elastomer may be coupled, star-branched or both; or else functionalized with a coupling agent, a star-branching agent or both; or a functionalizing agent.

According to a more preferred embodiment of the preferred embodiment, the first rubber composition (FC) is such that the elastomer matrix comprises at least 50 phr and up to 100 phr, preferably at least 55 phr, more preferably at least 60 phr, still more preferably at least 65 phr, particularly at least 70 phr, more particularly at least 75 phr, of a first diene elastomer(s) which is a styrene butadiene copolymer(s), preferably a solution styrene butadiene copolymer(s), and the elastomer matrix comprises no second diene elastomer or comprises at most 50 phr, preferably at most 45 phr, more preferably at most 40 phr, still more preferably at most 35 phr, particularly at most 30 phr, more particularly at most 25 phr, of a second diene elastomer(s) which is different from the first diene elastomer(s).

According to a still more preferred embodiment of the more preferred embodiment, the first diene elastomer(s) exhibits a glass transition temperature(s) (Tg_{DSC}) of lower than -45°C.

According to a particular embodiment of the still more preferred embodiment, the first diene elastomer(s) exhibits a glass transition temperature(s) (Tg_{DSC}) of higher than -110°C, preferably higher than -105°C, more preferably higher than -100°C, still more preferably higher than -95°C, particularly higher than -90°C.

According to a still more preferred embodiment of the more preferred embodiment, the second diene elastomer(s) is a polybutadiene(s) (BR(s)), preferably exhibiting a glass transition temperature(s) (Tg_{DSC}) of lower than -60°C, preferably lower than - 70°C, more preferably lower than -80°C, still more preferably lower than -90°C, particularly lower than -100°C.

According to a particular embodiment of the still more preferred embodiment, the polybutadiene(s) exhibits a glass transition temperature(s) (Tg_{DSC}) of higher than - 140°C, preferably higher than -135°C, more preferably higher than -125°C, still more preferably higher than -120°C, particularly higher than -115°C, more particular at least -110°C.

A third aspect of the invention is the article according to the first aspect or the second aspect, wherein the second rubber composition (SC) is such that the elastomer matrix comprises at least 50 phr, preferably at least 55 phr, more preferably at least 60 phr, still more preferably at least 65 phr, particularly at least 70 phr, more particularly at least 75 phr, still more particularly at least 80 phr, advantageously at least 85 phr, more advantageously at least 90 phr, still more advantageously at least 95 phr, especially 100 phr, of a polyisoprene(s).

According to a preferred embodiment of the third aspect, the polyisoprene(s) is natural rubber (NR), a synthetic polyisoprene(s) (IR(s)) or combinations thereof. The synthetic polyisoprene(s) may be a synthetic cis-1,4-polyisoprene(s), preferably having a content (molar %) of cis-1,4 bonds of more than 90%, more preferably more than 95%, still more preferably at least 98%.

Each of the rubber compositions (FC and SC) of the laminate of the article according to the invention is based on a reinforcing filler.

The reinforcing filler may comprise a reinforcing organic filler (for example, a carbon black(s)), a reinforcing inorganic filler (for instance, a silica(s)) or combinations thereof.

Use may be made of any type of reinforcing filler known for its capabilities of reinforcing a rubber composition which can be used for the manufacture of the article, for example a reinforcing organic filler, such as a carbon black(s), or a reinforcing inorganic filler, such as a silica(s), with which a coupling agent is combined in a known way.

The article according to the invention has an essential feature that the amount in phr of the reinforcing filler in the second rubber composition (SC) is lower than that in the first rubber composition (FC).

According to a preferred embodiment of the invention, the amount in phr of the reinforcing filler in the second rubber composition (SC) is lower than 95%, preferably 90%, more preferably 85%, still more preferably 80%, particularly 75%, more particularly 70%, still more particularly 65%, advantageously 60%, more advantageously 55%, still more advantageously 50%, of the amount in phr of the reinforcing filler in the first rubber composition (FC).

According to a preferred embodiment of the invention, the amount of the reinforcing filler in the first rubber composition (FC) is more than 70 phr, preferably more than 75 phr, more preferably more than 80 phr, still more preferably more than 85 phr, particularly more than 90 phr, more particularly more than 95 phr, still more particularly more than 100 phr, advantageously more than 105 phr, more advantageously more than 110 phr.

According to a preferred embodiment of the invention, the amount of the reinforcing filler in the first rubber composition (FC) is less than 300 phr, preferably less than 280 phr, more preferably less than 260 phr, still more preferably less than 240 phr, particularly less than 220 phr, more particularly less than 200 phr, still more particularly less than 180 phr, advantageously less than 160 phr, more advantageously less than 140 phr, still more advantageously less than 120 phr.

A fourth aspect of the invention is the article according to any one of the first to the third aspects, wherein the second rubber composition (SC) is such that the amount of the reinforcing filler is at most 110 phr, preferably at most 105 phr, more preferably at most 100 phr, still more preferably at most 95 phr, particularly at most 90 phr, more particularly at most 85 phr, still more particularly at most 80 phr, advantageously at most 75 phr, more advantageously at most 70 phr, still more advantageously at most 65 phr.

A fifth aspect of the invention is the article according to any one of the first to the fourth aspects, wherein the second rubber composition (SC) is such that the amount of the reinforcing filler is at least 15 phr, preferably at least 20 phr, more preferably at least 25 phr, still more preferably at least 30 phr, particularly at least 35 phr, more particularly at least 40 phr, still more particularly at least 45 phr, advantageously at least 50 phr, more advantageously at least 55 phr, still more advantageously at least 60 phr.

According to a preferred embodiment of the invention, the first rubber composition (FC) is such that the reinforcing filler predominately comprises a reinforcing inorganic filler, that is, the reinforcing filler comprises more than 50% by weight of the reinforcing inorganic filler per 100% by weight of the reinforcing filler, preferably the reinforcing filler comprises more than 60%, more preferably more than 70%, still more preferably more than 80%, particularly more than 90%, by weight of the reinforcing inorganic filler per 100% by weight of the reinforcing filler.

According to a more preferred embodiment of the preferred embodiment, the reinforcing inorganic filler comprises more than 60%, preferably more than 70%, more preferably more than 80%, still more preferably more than 90%, particularly 100%, by weight of the silica(s) per 100% by weight of the reinforcing inorganic filler.

A sixth aspect of the invention is the article according to any one of the first to the fifth aspects, wherein the second rubber composition (SC) is such that the reinforcing filler predominately comprises a reinforcing inorganic filler, that is, the reinforcing filler comprises more than 50% by weight of the reinforcing inorganic filler per 100% by weight of the reinforcing filler, preferably wherein the reinforcing inorganic filler predominately comprises a silica(s), that is, the reinforcing inorganic filler comprises more than 50% by weight of the silica(s) per 100% by weight of the reinforcing inorganic filler.

According to a preferred embodiment of the sixth aspect, wherein the second rubber composition (SC) is such that the reinforcing filler comprises more than 60%, preferably more than 70%, more preferably more than 80%, still more preferably more than 90%, by weight of the reinforcing inorganic filler per 100% by weight of the reinforcing filler.

The expression "reinforcing inorganic filler" should be understood here to mean any inorganic or mineral filler, whatever its color and its origin (natural or synthetic), also referred to as "white filler", "clear filler" or even "non-black filler", in contrast to a carbon black(s), capable of reinforcing by itself alone, without means other than an intermediate coupling agent, a rubber composition intended for the manufacture of tires, in other words capable of replacing, in its reinforcing role, a conventional tire-grade carbon black; such a filler is generally characterized, in a known manner, by the presence of hydroxyl (-OH) groups at its surface.

The physical state under the presence of this filler is unimportant, whether it is in the form of powder, microbeads, granules, beads or any other suitable densified form. Of course, the reinforcing inorganic filler of the mixtures of various inorganic fillers, preferably of highly dispersible siliceous, aluminous fillers or combinations thereof is described hereafter.

Each of mineral fillers of the siliceous type (preferably silica (SiO₂)), the aluminous type (preferably alumina (Al₂O₃)) or combinations thereof is suitable in particular as the reinforcing inorganic filler.

According to a more preferred embodiment of the sixth aspect or the preferred embodiment, the second rubber composition (SC) is such that the reinforcing inorganic filler comprises more than 60%, preferably more than 70%, more preferably more than 80%, still more preferably more than 90%, particularly 100%, by weight of the silica(s) per 100% by weight of the reinforcing inorganic filler.

The silica(s) may be a type of silica or a blend of several silicas. The silica(s) used may be any reinforcing silica(s) known to a person skilled in the art, in particular any precipitated or pyrogenic silica(s) having a BET surface area and a CTAB specific surface area that are both at most 450 m²/g, preferably from 20 to 400 m²/g, more preferably from 50 to 350 m²/g, still more preferably from 100 to 300 m²/g, particularly from 150 to 250 m²/g, wherein the BET surface area is measured according to a known method, that is, by gas adsorption using the Brunauer-Emmett-Teller method described in "The Journal of the American Chemical Society", Vol. 60, page 309, February 1938, and more specifically, in accordance with the French standard NF ISO 9277 of December 1996 (multipoint volumetric method (5 points); where gas: nitrogen, degassing: 1 hour at 160°C, relative pressure range p/po: 0.05 to 0.17). The CTAB specific surface area is determined according to the French standard NF T 45-007 of November 1987 (method B). Such silica(s) may be covered or not.

A person skilled in the art will understand that a reinforcing filler of another nature, in particular organic nature, such as a carbon black(s), might be used as filler equivalent to the reinforcing inorganic filler described in the present section, provided that this reinforcing filler is covered with an inorganic layer, such as a silica(s), or else comprises, at its surface, functional sites, in particular hydroxyls, requiring the use of a coupling agent in order to form the connection between the filler and the elastomer. By way of example, mention may be made of carbon blacks for tires, such as described in patent applications WO 96/37547 and WO 99/28380.

Use can be made in particular of silane polysulfides, referred to as "symmetrical" or "asymmetrical" depending on their particular structure, as described, for example, in applications WO 03/002648, WO 03/002649 and WO 2004/033548.

Particularly suitable silane polysulfides correspond to the following general formula (I):

(I) Z - A - Sx - A - Z,

in which:
- x is an integer from 2 to 8 (preferably from 2 to 5);
- A is a divalent hydrocarbon radical (preferably, C₁-C₁₈ alkylene groups or C₆-C₁₂ arylene groups, more particularly C₁-C₁₀, in particular C₁-C₄, alkylenes, especially propylene);
- Z corresponds to one of the formulae below: 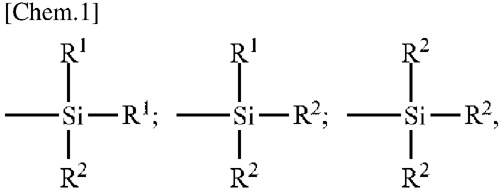 in which:
   - the R¹ radicals which are unsubstituted or substituted and identical to or different from one another, represent a C₁-C₁₈ alkyl, C₅-C₁₈ cycloalkyl or C₆-C₁₈ aryl group (preferably, C₁-C₆ alkyl, cyclohexyl or phenyl groups, in particular C₁-C₄ alkyl groups, more particularly methyl, ethyl or both),
   - the R² radicals which are unsubstituted or substituted and identical to or different from one another, represent a C₁-C₁₈ alkoxyl or C₅-C₁₈ cycloalkoxyl group (preferably a group selected from C₁-C₈ alkoxyls and C₅-C₈ cycloalkoxyls, more preferably a group selected from C₁-C₄ alkoxyls, in particular methoxyl and ethoxyl), are suitable in particular, without limitation of the above definition.

In the case of a mixture of alkoxysilane polysulfides corresponding to the above formula (I), in particular normal commercially available mixtures, the mean value of the "x" indices is a fractional number preferably of between 2 and 5, more preferably of approximately 4. However, the invention can also advantageously be carried out, for example, with alkoxysilane disulfides (x = 2).

Mention will more particularly be made, as examples of silane polysulfides, of bis((C ₁-C₄)alkoxyl(C₁-C₄)alkylsilyl(C₁-C₄)alkyl)polysulfides (in particular disulfides, trisulfides or tetrasulfides), such as, for example, bis(3-trimethoxysilylpropyl) or bis(3-triethoxysilylpropyl)polysulfides. Use is in particular made, among these compounds, of bis(3-triethoxysilylpropyl)tetrasulfide, abbreviated to TESPT, of formula [(C₂H₅O)₃Si(CH₂)₃S₂]₂, or bis(3-triethoxysilylpropyl)disulfide, abbreviated to TESPD, of formula [(C₂H₅O)₃Si(CH₂)₃S]₂- Mention will also be made, as preferred examples, of bis(mono(C₁-C₄)alkoxyldi(C₁-C₄)alkylsilylpropyl)polysulfides (in particular disulfides, trisulfides or tetrasulfides), more particularly bis(monoethoxydimethylsilylpropyl)tetrasulfide, as described in patent application WO 02/083782 (or US 7 217 751).

Mention will in particular be made, as coupling agent other than alkoxysilane polysulfide, of bifunctional POSs (polyorganosiloxanes) or of hydroxysilane polysulfides (R² = OH in the above formula (I)), such as described in patent applications WO 02/30939 (or US 6 774 255) and WO 02/31041 (or US 2004/051210), or of silanes or POSs carrying azodicarbonyl functional groups, such as described, for example, in patent applications WO 2006/125532, WO 2006/125533 and WO 2006/125534.

As examples of other silane sulfides, mention will be made, for example, of the silanes bearing at least one thiol (-SH) function (referred to as mercaptosilanes), at least one blocked thiol function or both, such as described, for example, in patents or patent applications US 6 849 754, WO 99/09036, WO 2006/023815, WO 2007/098080, WO 2008/055986 and WO 2010/072685.

Of course, use could also be made of mixtures of the coupling agents described previously, as described in particular in the aforementioned patent application WO 2006/125534.

According to a preferred embodiment of the invention, at least one of the first rubber composition (FC), the second rubber composition (SC) or combinations thereof, especially each of the rubber compositions (FC and SC), comprises a reinforcing inorganic filler (preferably a silica(s)), and a coupling agent of which the amount is from 0.5 to 15% by weight per 100% by weight of the reinforcing inorganic filler (preferably a silica(s)).

According to a preferred embodiment of the invention, at least one of the first rubber composition (FC), the second rubber composition (SC) or combinations thereof, especially each of the rubber compositions (FC and SC), comprises a reinforcing inorganic filler (preferably a silica(s)), and a coupling agent of which the amount is less than 30 phr (for example, between 0 and 30 phr), preferably less than 25 phr (for example, between 0.2 and 25 phr), more preferably less than 20 phr (for example, between 0.4 and 20 phr), still more preferably less than 15 phr (for example, between 0.6 and 15 phr), particularly less than 10 phr (for example, between 0.8 and 10 phr).

According to a preferred embodiment of the invention, at least one of the first rubber composition (FC), the second rubber composition (SC) or combinations thereof, especially each of the rubber compositions (FC and SC), comprises a carbon black(s) of which the amount is less than 15 phr (for example, between 0 and 15 phr), preferably less than 10 phr (for example, between 1 and 10 phr), more preferably at most 5 phr (for example, from 2 to 5 phr).

Within each of the aforementioned ranges of content of the carbon black(s) in the rubber compositions (FC and SC), there is a benefit of coloring properties (black pigmentation agent) and anti-UV properties of carbon blacks, without furthermore adversely affecting the typical performance provided by the reinforcing inorganic filler, namely low hysteresis loss.

As carbon blacks, all carbon blacks conventionally used in tires ("tire-grade" blacks) are suitable, such as for example reinforcing carbon blacks of the 100, 200 or 300 series in ASTM grades (such as for example, the N115, N134, N234, N326, N330, N339, N347 or N375 blacks), or carbon blacks higher series, the 500, 600, 700 or 800 series in ASTM grades (such as for example the N550, N660, N683, N772, N774 blacks). The carbon blacks might for example be already incorporated in an elastomer matrix, for instance, a diene elastomer, in the form of a masterbatch (see for example applications WO 97/36724 or WO 99/16600).

Each of the rubber compositions (FC and SC) of the laminate of the article according to the invention is based on a plasticizing agent.

The role of the plasticizing agent is to soften the matrix by diluting the elastomer and the reinforcing filler.

The article according to the invention has an essential feature that the ratio of the amount in phr of the plasticizing agent to the reinforcing filler in the second rubber composition (SC) is higher than that in the first rubber composition (FC).

For example, in a rubber composition (C-0) shown in Table 1, the amount in phr of the plasticizing agent is 70 phr [= {55 phr (Hydrocarbon resin 1) + 5 phr (Liquid plasticizer 1) + 10 phr (Liquid plasticizer 2)}], the amount in phr of the reinforcing filler is 113 phr [=[3 phr (Carbon black 1) + 110 phr (Silica)}], and the ratio of the amount in phr of the plasticizing agent to the reinforcing filler is 0.6 [= {55 phr (Hydrocarbon resin 1) + 5 phr (Liquid plasticizer 1) + 10 phr (Liquid plasticizer 2)}/{3 phr (Carbon black 1) + 110 phr (Silica)}].

According to a preferred embodiment of the invention, the ratio of the amount in phr of the plasticizing agent to the reinforcing filler in the second rubber composition (SC) is higher than 3/2 times, preferably twice, of the ratio of the amount in phr of the plasticizing agent to the reinforcing filler in the first rubber composition (FC).

According to a preferred embodiment of the invention, the first rubber composition (FC) is such that the ratio of the amount in phr of the plasticizing agent to the reinforcing filler is less than 1.0, preferably less than 0.9, more preferably less than 0.8, still more preferably less than 0.7.

A seventh aspect of the invention is the article according to any one of the first to the sixth aspects, wherein the second rubber composition (SC) is such that the ratio of the amount in phr of the plasticizing agent to the reinforcing filler is at least 1.0, preferably at least 1.1.

According to a preferred embodiment of the invention, the first rubber composition (FC) is such that the amount of the plasticizing agent is more than 30 phr, preferably more than 35 phr, more preferably more than 40 phr, still more preferably more than 45 phr, particularly more than 50 phr, more particularly more than 55 phr, still more particularly more than 60 phr, advantageously more than 65 phr.

According to a preferred embodiment of the invention, the first rubber composition (FC) is such that the amount of the plasticizing agent is less than 110 phr, preferably less than 105 phr, more preferably less than 100 phr, still more preferably less than 95 phr, particularly less than 90 phr, more particularly less than 85 phr, still more particularly less than 80 phr, advantageously less than 75 phr.

An eighth aspect of the invention is the article according to any one of the first to the seventh aspects, wherein the second rubber composition (SC) is such that the amount of the plasticizing agent is at least 10 phr, preferably at least 15 phr, more preferably at least 20 phr, still more preferably at least 25 phr, particularly at least 30 phr, more particularly at least 35 phr, still more particularly at least 40 phr, advantageously at least 45 phr, more advantageously at least 50 phr, more advantageously at least 55 phr, still more advantageously at least 60 phr, especially at least 65 phr, more especially at least 70 phr.

According to a preferred embodiment of the invention, the second rubber composition (SC) is such that the amount of the plasticizing agent is at most 140 phr, preferably at most 130 phr, more preferably at most 120 phr, still more preferably at most 110 phr, particularly at most 100 phr, more particularly at most 90 phr.

Any extending oil, whether of aromatic or non-aromatic nature, any liquid plasticizing agent known for its plasticizing properties with regard to elastomer matrix(es), for instance, diene elastomers, can be used as the liquid plasticizer(s) to soften the matrix by diluting the elastomer and the reinforcing filler. At ambient temperature (20°C) under atmospheric pressure, these plasticizers or these oils, which are more or less viscous, are liquids (that is to say, as a reminder, substances that have the ability to eventually take on the shape of their container), as opposite to plasticizing hydrocarbon resin(s) which are by nature solid at ambient temperature (20°C) under atmospheric pressure.

According to a preferred embodiment of the invention, the plasticizing agent comprises a liquid plasticizer(s) selected from the group consisting of liquid diene polymers, polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, phosphate plasticizers, sulfonate plasticizers and combinations thereof.

The hydrocarbon resin(s) are polymer well known by a person skilled in the art, which are essentially based on carbon and hydrogen, and thus miscible by nature in rubber composition(s), for instance, diene elastomer composition(s). They can be aliphatic or aromatic or also of the aliphatic/aromatic type, that is to say based on aliphatic, aromatic or both monomers. They can be natural or synthetic and may or may not be petroleum-based (if such is the case, also known under the name of petroleum resins). They are preferably exclusively hydrocarbon, that is to say, that they comprise only carbon and hydrogen atoms.

Preferably, the hydrocarbon resins as being "plasticizing" exhibit at least one, more preferably all, of the following characteristics:
- a Tg_{DSC} of more than 20°C (for example, between 20°C and 400°C), preferably more than 30°C (for example, between 30°C and 300°C), more preferably more than 40°C (for example, between 40°C and 200°C);
- a number-average molecular weight (Mn) of between 400 and 2000 g/mol (more preferably between 500 and 1500 g/mol);
- a polydispersity index (PI) of less than 3, more preferably less than 2 (reminder: PI = Mw/Mn with Mw the weight-average molecular weight).

The macrostructure (Mw, Mn and PI) of the hydrocarbon resins is determined by steric exclusion chromatography (SEC): solvent tetrahydrofuran; temperature 35°C; concentration 1 g/l; flow rate 1 ml/min; solution filtered through a filter with a porosity of 0.45µm before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

According to a preferred embodiment of the invention, the plasticizing agent comprises a hydrocarbon resin(s) selected from the group consisting of cyclopentadiene (abbreviated to CPD) homopolymer or copolymer resins, dicyclopentadiene (abbreviated to DCPD) homopolymer or copolymer resins, terpene homopolymer or copolymer resins, C₅ fraction homopolymer or copolymer resins, C₉ fraction homopolymer or copolymer resins, alpha-methyl styrene homopolymer or copolymer resins and combinations thereof. Use is more preferably made, among the above copolymer resins, of those selected from the group consisting of (D)CPD/vinylaromatic copolymer resins, (D)CPD/terpene copolymer resins, (D)CPD/C₅ fraction copolymer resins, (D)CPD/C₉ fraction copolymer resins, terpene/ vinylaromatic copolymer resins, terpene/phenol copolymer resins, C₅ fraction/ vinyl-aromatic copolymer resins, C₉ fraction/vinylaromatic copolymer resins, and combinations thereof.

The term "terpene" combines here, in a known way, the α-pinene, β-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, α-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a C₉ fraction (or more generally from a C₈ to C₁₀ fraction) are suitable, for example, as vinylaromatic monomer. Preferably, the vinylaromatic compound is styrene or a vinylaromatic monomer resulting from a C₉ fraction (or more generally from a C₈ to C₁₀ fraction). Preferably, the vinylaromatic compound is the minor monomer, expressed as molar fraction, in the copolymer under consideration.

The preferred resins above are well known to a person skilled in the art and are commercially available, for example:
- polylimonene resins: by DRT under the name "Dercolyte L120" (Mn=625 g/mol; Mw=1010 g/mol; PI=1.6; Tg_{DSC}=72°C) or by Arizona Chemical Company under the name "Sylvagum TR7125C" (Mn=630 g/mol; Mw=950 g/mol; PI=1.5; Tg_{DSC}=70°C);
- C₅ fraction/vinylaromatic, notably C₅ fraction/styrene or C₅ fraction/C₉ fraction, copolymer resins: by Neville Chemical Company under the names "Super Nevtac 78", "Super Nevtac 85" or "Super Nevtac 99", by Goodyear Chemicals under the name "Wingtack Extra", by Kolon under the names "Hikorez T1095" and "Hikorez T1100", or by Exxon under the names "Escorez 2101" and "ECR 373";
limonene/styrene copolymer resins: by DRT under the name "Dercolyte TS 105" or by Arizona Chemical Company under the names "ZT115LT" and "ZT5100".

Mention may also be made, as examples of other preferred resins, of phenol-modified α-methylstirene resins. It should be remembered that, in order to characterize these phenol-modified resins, use is made, in a known way, of a number referred to as "hydroxyl number" (measured according to Standard ISO 4326 and expressed in mg KOH/g). α-Methylstirene resins, in particular those modified with phenol, are well known to a person skilled in the art and are available commercially, for example sold by Arizona Chemical Company under the names "Sylvares SA 100" (Mn=660 g/mol; PI=1.5; Tg_{DSC}=53°C); "Sylvares SA 120" (Mn=1030 g/mol; PI=1.9; Tg_{DSC}=64°C); "Sylvares 540" (Mn=620 g/mol; PI=1.3; Tg_{DSC}=36°C; hydroxyl number=56 mg KOH/ g); and "Sylvares 600" (Mn=850 g/mol; PI=1.4; Tg_{DSC}=50°C; hydroxyl number=31 mg KOH/g).

According to a preferred embodiment of the invention, the first rubber composition (FC) is such that the plasticizing agent predominately comprises a hydrocarbon resin(s), that is, the plasticizing agent comprises more than 50% by weight of the hydrocarbon resin(s) per 100% by weight of the plasticizing agent, preferably the plasticizing agent comprises more than 60%, more preferably more than 70%, still more preferably more than 80%, particularly more than 90%, by weigh of the hydrocarbon resin(s) per 100% by weight of the plasticizing agent.

A ninth aspect of the invention is the article according to any one of the first to the eighth aspects, wherein the second rubber composition (SC) is such that the plasticizing agent predominately comprises a hydrocarbon resin(s), that is, the plasticizing agent comprises more than 50% by weight of the hydrocarbon resin(s) per 100% by weight of the plasticizing agent, preferably the plasticizing agent comprises more than 60%, more preferably more than 70%, still more preferably more than 80%, particularly more than 90%, by weigh of the hydrocarbon resin(s) per 100% by weight of the plasticizing agent.

A tenth aspect of the invention is the article according to any one of the first to the ninth aspects, wherein the average glass transition temperature of combination of the elastomer matrix and the plasticizing agent in the second rubber composition (SC) is higher than that in the first rubber composition (FC).

The average glass transition temperature is calculated by FOX equation ((Tg_{DSC Average} +273)⁻¹=Σ(wᵢ/(Σ(wᵢ))/(Tg_{DSC} i+273)), Tg_{DSC Average}: Average glass transition temperature, wᵢ: Amount in phr of the i^{th} component in the elastomer matrix and the plasticizing agent; Tg_{DSC i}: Glass transition temperature in °C of the i^{th} component).

For example, in a rubber composition (C-0) shown in Table 1, the components are BR, SBR1, Hydrocarbon resin 1, Liquid plasticizer 1 and Liquid plasticizer 2.

According to a preferred embodiment of the invention, the first rubber composition (FC) is such that the average glass transition temperature of combination of the elastomer matrix and the plasticizing agent is lower than -35°C.

According to a preferred embodiment of the invention, the first rubber composition (FC) is such that the average glass transition temperature of combination of the elastomer matrix and the plasticizing agent is higher than -110°C.

An eleventh aspect of the invention is the article according to any one of the first to the tenth aspects, wherein the second rubber composition (SC) is such that the average glass transition temperature of combination of the elastomer matrix and the plasticizing agent is equal to or higher than -35°C, preferably equal to or more than -30°C, more preferably equal to or more than -25°C.

According to a preferred embodiment of the invention, the second rubber composition (SC) is such that the average glass transition temperature of combination of the elastomer matrix and the plasticizing agent is equal to or lower than 35°C, preferably equal to or lower than 30°C, more preferably equal to or lower than 25°C, still more preferably equal to or lower than 20°C, particularly equal to or lower than 15°C, more particularly equal to or lower than 10°C, still more particularly equal to or lower than 5°C, advantageously equal to or lower than 0°C.

Each of the rubber compositions (FC and SC) of the laminate of the article according to the invention is based on a sulfur-based vulcanization accelerator.

The sulfur-based vulcanization accelerator promotable sulfur vulcanization reaction is a vulcanization accelerator based on at least one sulfur atom in a molecule.

The sulfur-based vulcanization accelerator may promote sulfur vulcanization reaction in each of the rubber compositions (FC and SC).

The article according to the invention has an essential feature that the amount in phr of the sulfur-based vulcanization accelerator in the second rubber composition (SC) is lower than that in the first rubber composition (FC).

According to a preferred embodiment of the invention, the amount in phr of the sulfur-based vulcanization accelerator in the first rubber composition (FC) is at most 10 phr, preferably at most 9.0 phr, more preferably at most 8.0 phr, still more preferably at most 7.0 phr, particularly at most 6.0 phr, more particularly at most 5.0 phr, still more particularly at most 4.0 phr, advantageously at most 3.0 phr.

According to a preferred embodiment of the invention, the amount in phr of the sulfur-based vulcanization accelerator in the first rubber composition (FC) is at least 1.5 phr, preferably at least 1.6 phr, more preferably at least 1.7 phr, still more preferably at least 1.8 phr, particularly at least 1.9 phr, more particularly at least 2.0 phr, still more particularly at least 2.1 phr, advantageously at least 2.2 phr.

A twelfth aspect of the invention is the article according to any one of the first to the eleventh aspects, wherein the amount in phr of the sulfur-based vulcanization accelerator in the second rubber composition (SC) is lower than 1.5 phr, preferably lower than 1.4 phr, more preferably lower than 1.3 phr, still more preferably lower than 1.2 phr, particularly lower than 1.1 phr, more particularly lower than 1.0 phr.

According to a preferred embodiment of the invention, the second rubber composition (SC) is such that the amount of the sulfur-based vulcanization accelerator is more than 0.1 phr, preferably more than 0.2 phr, more preferably more than 0.3 phr, still more preferably more than 0.4 phr, particularly more than 0.5 phr, more particularly more than 0.6 phr, still more particularly more than 0.7 phr, advantageously more than 0.8 phr.

According to a preferred embodiment of the invention, the sulfur-based vulcanization accelerator is based on sulfenamide type vulcanization accelerator(s) (for example, N-Cyclohexyl-2-benzothiazolesulfenamide (CBS), N-tert-Butyl-2-benzothiazolesulfenamide (TBBS), 2-(Morpholinothio)benzothiazole (MBS), N,N-Dicyclohexyl-2-benzothiazolesulfenamide (DCBS), N-Tert-Butyl-2-benzothiazolesulfenamide (TBSI)), thiazole type vulcanization accelerator(s) (for example, 2,2'-Dithiobisbenzothiazole (MBTS), Zinc 2-mercaptobenzothiazole (ZMBT)), thiourea type vulcanization accelerator(s), thiuram type vulcanization acclerator(s) (for example, Tetrabenzylthiuram disulfide (TBzTD)), dithiocarbamate type vulcanization accelerator(s) (for example, Zinc ethylphenyldithiocarbamate (ZEPC), Zinc dibenzyldithiocarbamate (ZDBzC)) or combinations thereof.

According to a preferred embodiment of the invention, at least one of the first rubber compositions (FC), the second rubber composition (SC) or combinations thereof, in particular the rubber compositions each, is based on further a vulcanization accelerator other than the sulfur-based vulcanization accelerator, preferably the vulcanization accelerator other than the sulfur-based vulcanization is based on guanidine derivatives or combinations thereof, more preferably the vulcanization accelerator other than the sulfur-based vulcanization is based on diphenylguanidine.

The vulcanization accelerator other than the sulfur-based vulcanization accelerator may promote a vulcanization reaction in each of the rubber compositions (FC and SC).

According to a preferred embodiment of the invention, at least one of the rubber compositions (FC and SC), particularly the rubber compositions each, is based on further a vulcanization activator, preferably the vulcanization accelerator is based on zinc (particularly pure zinc, zinc derivatives (for example, zinc fatty acid salt), or combinations thereof), fatty acid (particularly stearic acid) or combinations thereof.

The vulcanization activator may increase efficiency of a vulcanization accelerator based on sulfur-based vulcanization accelerator, a vulcanization accelerator other than the sulfur-based vulcanization or combinations thereof.

A thirteenth aspect of the invention is the article according to any one of the first to the twelfth aspects, wherein the rubber compositions (FC and SC) each is based on further sulfur, and wherein the amount in phr of sulfur in the second rubber composition (SC) is lower than that in the first rubber composition (FC).

The sulfur is a vulcanization agent to say vulcanization sulfur which may be based on sulfur, sulfur derived from a sulfur-donating agent or combinations thereof.

According to a preferred embodiment of the thirteenth aspect, the amount in phr of sulfur in each of the rubber compositions (FC and SC) is less than 10 phr, preferably less than 3.0 phr.

According to a preferred embodiment of the thirteenth aspect, the amount in phr of sulfur in each of the rubber compositions (FC and SC) is at more than 0.1 phr, preferably more than 0.5 phr.

According to a preferred embodiment of the invention, at least one of the first rubber compositions (FC), the second rubber composition (SC) or combinations thereof, particularly the rubber compositions each, is based on further a vulcanization agent other than sulfur, preferably the vulcanization agent other than sulfur is a peroxide, a bismaleimide or combinations thereof.

Each of the rubber compositions (FC and SC) of the laminates of the article according to the invention may be based on all or a portion(s) of the usual additives generally used in the elastomer composition(s), such as, for example, protection agents, such as antiozone waxes, chemical antiozonants, antioxidants, tackifying resins, methylene acceptors (for example, phenolic novolak resin) or methylene donors (for example, hexamethylenetetramine (HMT) or hexamethoxymethylmelamine (H3M)) or combinations thereof.

Each of the rubber compositions (FC and SC) of the laminate according to the invention may be manufactured in appropriate mixers using two successive preparation phases well known to a person skilled in the art: a first phase of thermomechanical working or kneading (referred to as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40°C and 100°C, finishing phase during which a sulfur-based-vulcanization accelerator is incorporated, preferably during which a sulfur-based-vulcanization accelerator and at least one of sulfur, a peroxide, a bismaleimide, a vulcanization retarder or combinations thereof are incorporated.

A process which can be used for the manufacture of each of such compositions (FC and SC) comprises, for example and preferably, the following steps:
- incorporating in an elastomer matrix, in a mixer, a reinforcing filler and a plasticizing agent during a first stage (referred to as a "non-productive" stage) everything being kneaded thermomechanically (for example in one or more steps) until a maximum temperature of between 110°C and 190°C is reached;
- cooling the combined mixture to a temperature of less than 100°C;
- subsequently incorporating, during a second stage (referred to as a "productive" stage), a sulfur-based-vulcanization accelerator, preferably a sulfur-based-vulcanization accelerator and at least one of sulfur, a peroxide, a bismaleimide, a vulcanization retarder or combinations thereof; and
- kneading everything up to a maximum temperature of less than 110°C.

By way of example, the first (non-productive) phase may be carried out in a single thermomechanical stage during which all the necessary constituents are introduced into an appropriate mixer, such as a standard internal mixer, followed, in a second step, for example after kneading for 1 to 2 minutes, by the other additives, optional additional filler-covering agents or processing aids, with the exception of a sulfur-based-vulcanization accelerator (and at least one of sulfur, a peroxide, a bismaleimide, a vulcanization retarder or combinations thereof). The total kneading time, in this non-productive phase, is preferably between 1 and 15 min.

After cooling the mixture thus obtained, the sulfur-based-vulcanization accelerator (and at least one of sulfur, the peroxide, the bismaleimide, the vulcanization retarder or combinations thereof) may be then incorporated at low temperature (for example, between 40°C and 100°C), generally in an external mixer, such as an open mill; the combined mixture is then mixed (the second (productive) phase) for a few minutes, for example between 2 and 15 min.

Each of the final compositions thus obtained is subsequently extruded or calendered, for example in the form of a sheet or of a plaque, in particular for laboratory characterization, or else extruded in the form of a rubber profiled element which can be used directly as a laminate of an article, for example, a tire tread.

The laminate of the article according to the invention comprises at least two superposed portions comprising a first portion (FP) made of a first rubber composition (FC), and a second portion (SP) made of a second rubber composition (SC).

As for making the laminate of the article according to the invention, it is possible to build a first layer (as the first portion (FP)) of a homogeneous rubber composition (as the first rubber composition (FC)) and a second layer (as the second portion (SP)) of a homogeneous rubber composition (as the second rubber composition (SC)), and then to superpose the first layer onto the second layer to get the laminate.

According to a preferred embodiment of the invention, the second portion (SP) made of the second rubber composition (SC) is adjacent to the first portion (FP) made of the first rubber composition (FC).

The article according to the invention is intended to come into contact with the ground, and the second portion (SP) of the laminate of the article is positioned farther from the ground than the first portion (FP), that is, the first portion (FP) is arranged nearer to the ground than the second portion (SP).

The second portion (SP) of the laminate of the article according to the invention is farther from the ground than the first portion (FP).

A fourteenth aspect of the invention is the article according to any one of the first to the thirteenth aspects, wherein the first portion (FP) is intended to come into contact with the ground during the service life of the article, preferably wherein the first portion (FP) and the second portion (SP) are intended to come into contact with the ground during the service life of the article, that is, the second portion (SP) is also intended to come into contact with the ground during the service of the article after the first portion (FP) is worn out.

According to another preferred embodiment of the invention, the first portion (FP) is intended to come into contact with the ground during the service life of the article, while the second portion (SP) is not intended to come into contact with the ground during the service life of the article.

The service life means the duration to use the article (for example, the term from the new state to the final state of the article, in case of that the article is a tire, the final state means a state on reaching the wear indicator bar(s) in the tread of tire).

According to a preferred embodiment of the invention, the article is a tire, a shoe or a caterpillar track, preferably the laminate of the article is comprised in a tire tread, a shoe or a caterpillar track.

A fifteenth aspect of the invention is the article according to any one of the first to the fourteenth aspects, wherein the article is a tire, preferably wherein the laminate is comprised in a tire tread.

According to a preferred embodiment of the fifteenth aspect, the article is a tire comprising several tire parts which are a tread intended to at least partially contact with the ground, two sidewalls intended to contact with the outside air, but not to contact with the ground, two beads, a crown prolonged by two sidewalls ended by two beads, a carcass reinforcement formed at least one ply reinforced by radial textile cards, the carcass reinforcement passing into the crown and the sidewalls and the carcass reinforcement anchored in the two beads, preferably further comprising crown reinforcement placed between carcass reinforcement and the tread, more preferably further comprising an inner liner intended to protect the carcass reinforcement from diffusion of air coming from a space inside the tire, and the inner liner placed radially inner than carcass reinforcement.

The "radially" means "in the radial direction" which is a direction perpendicular to the axis of the rotation of a tire.

According to a preferred embodiment of the fifteenth aspect, the tires are particularly intended to equip passenger motor vehicles, including 4×4 (four-wheel drive) vehicles and SUV (Sport Utility Vehicles) vehicles, and industrial vehicles particularly selected from vans and heavy-duty vehicles (i.e., bus or heavy road transport vehicles (lorries, tractors, trailers)).

The vulcanization (or curing) is carried out in a known way at a temperature generally of between 110°C and 190°C for a sufficient time which can vary, for example, between 5 and 90 min depending in particular on the curing temperature, the vulcanization system adopted and the vulcanization kinetics of the composition(s) under consideration.

The invention relates to the rubber composition(s), to the laminate(s), to the article(s), to the tire (s) and the tire tread(s) described above, both in the raw state (i.e., before curing) and in the cured state (i.e., after crosslinking or vulcanization).

The invention is further illustrated by the following non-limiting examples.

### Example

In order to confirm the effect of the invention, four rubber compositions (C-0 to C-3) were used. The rubber compositions are based on a diene elastomer(s) (a blend of SBR and BR or IR only, as an elastomer matrix) reinforced with a blend of a silica and a carbon black (as a reinforcing filler), a hydrocarbon resin, a liquid plasticizer(s) or both (as a plasticizing agent) and N-dicyclohexyl-2-benzothiazolesulfenamide (abbreviated as "CBS", as a sulfur-based vulcanization accelerator). The formulations of the rubber compositions are shown in Table 1 with the amount of the various products expressed in phr. Each ratio of the amount in phr of the plasticizing agent to the reinforcing filler and each average glass transition temperature of combination of the elastomer matrix and the plasticizing agent are also shown in Table 1.

Each rubber composition was produced as follows: The reinforcing filler, the plasticizing agent, the elastomer matrix and the various other ingredients, with the exception of sulfur and the sulfur-based vulcanization accelerator (and also a vulcanization retarder (N-cyclohexylthiophthalimide (abbreviated as "CTP") in case of C-0), were successively introduced into an internal mixer having an initial vessel temperature of approximately 60°C; the mixer was thus approximately 70% full (% by volume). Thermomechanical working (non-productive phase) was then carried out in one stage, which lasts in total approximately 3 to 4 minutes, until a maximum "dropping" temperature of 165°C was reached. The mixture thus obtained was recovered and cooled and then sulfur and the sulfenamide type vulcanization accelerator (and also the CTP in case of C-0) were incorporated on an external mixer (homofinisher) at 20 to 30°C, everything being mixed (productive phase) for an appropriate time (for example, between 5 and 12 min).

The rubber compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting, assembling, or both to the desired dimensions, for example as tire semi-finished products, in particular as tire treads.

Moreover, four tires (T-0: a comparative example, T-1: a reference, T-2 and T-3: examples according to the invention) having treads comprising laminates comprising radially external portions being made of first rubber compositions and radially internal portions being made of second rubber compositions, the radially external portions being adjacent to the radially internal portions, the laminates being produced by superposition of the sheets of the first rubber compositions (C-0) and the second rubber compositions (C-0, C-1, C-2 and C-3) respectively, as shown in Table 2, are compared.

These tires having treads comprising grooves circumferentially, axially, or both extending, were conventionally manufactured and in all respects identical apart from the rubber compositions and the laminates of the tire treads. These tires are radial carcass passenger vehicle tires and the size of them is 235/45R18.

As road noise performance evaluation, a 2500 cc passenger car provided on all of the four wheels with the same kinds of the above tires and with a microphone positioned at a passenger's ear close to window was driven at a constant speed of 80 kph on a straight path weathered asphalt, the interior noise was measured using the microphone, and the A-weighted sound pressure level from 50 to 500 Hz was calculated. The results shown in Table 2 are represented by difference in dB(A) against the reference (T-1), lower the value indicates better the performance.

The results from Table 2 demonstrate that the examples (T-2 and T-3) according to the invention have better values of the road noise performance than that the comparative example and the reference (T-0 or T-1).

In conclusion, the article according to the invention allows an improved road noise performance.

**[Table 1]**

| | C-0 | C-1 | C-2 | C-3 |
|---|---|---|---|---|
| BR (1) | 20 | | | |
| SBR1 (2) | 80 | | | |
| IR (3) | | 100 | 100 | 100 |
| Carbon black 1 (4) | 3 | | | |
| Carbon black 2 (5) | | 3 | 3 | 3 |
| Silica (6) | 110 | 60 | 60 | 60 |
| Coupling agent (7) | 8.8 | 4.8 | 4.8 | 4.8 |
| Hydrocarbon resin 1 (8) | 55 | | | |
| Hydrocarbon resin 2 (9) | | 80 | 87 | 64 |
| Liquid plasticizer 1 (10) | 5 | | | 4 |
| Liquid plasticizer 2 (11) | 10 | | | 6 |
| Antioxidant (12) | 5.3 | 2.2 | 2.2 | 2.2 |
| Antiozone wax | 2.5 | | | |
| DPG (13) | 2 | 2 | 2 | 2 |
| Stearic acid | 2 | 2 | 2 | 2 |
| Zinc oxide | 1 | 3 | 3 | 3 |
| Sulfur | 1 | 1 | 0.9 | 0.9 |
| CBS (14) | 2.3 | 3.2 | 0.9 | 0.9 |
| CTP (15) | 0.2 | | | |
| Amount in phr of the reinforcing filler | 113 | 63 | 63 | 63 |
| Amount in phr of the plasticizing agent | 70 | 80 | 87 | 74 |
| Ratio of the amount in phr of the plasticizing agent to the reinforcing filler | 0.6 | 1.3 | 1.4 | 1.2 |
| Amount in phr of the sulfur-based vulcanization accelerator | 2.3 | 3.2 | 0.9 | 0.9 |
| Average Tg of the elastomer matrix and the plasticizing agent {°C} | -39 | -25 | -22 | -35 |
| Amount in phr of sulfur | 1 | 1 | 0.9 | 0.9 |

| | | | | |
|---|---|---|---|---|
| (1) BR (0.3% of 1,2 vinyl; 2.7% of trans; 97% of cis-1,4, Tg_{DSC} = -105°C); (2) Solution SBR (27% of styrene unit and 24% of unit 1,2 of the butadiene part, Tg_{DSC} = -48°C); (3) IR ("IR2200" from ZEON, 98% of cis-1,4, Tg_{DSC} = -62°C); (4) Carbon black (ASTM grade N234 from Cabot); (5) Carbon black (ASTM grade N550 from Cabot); (6) Silica ("Zeosil 1165MP" from Rhodia (CTAB, BET: about 160 m²/g)); (7) Coupling agent TESPT ("Si69" from Evonik); (8) Cycloaliphatic hydrocarbon resins ("Escorez 5600" from Exxon, Tg_{DSC} = 52°C); (9) Hydrocarbon resin C₅/C₉ type ("Escorez ECR-373" from Exxon, Tg_{DSC} = 44°C); (10) MES oil ("Catenex SNR" from Shell, Tg_{DSC} = -60°C); (11) Tris(2-ethylhexyl)phosphate, "Disflamoll TOF", from LANXESS Company (Tg _{DSC} = -105°C); (12) Combination of N-(1,3-dimethylbutyl)-N-phenyl-para-phenylenediamine ("Santoflex 6-PPD" from Flexsys) and 2,2,4-trimethyl-1,2-dihydroquinolone ("TMQ" from Lanxess); (13) Diphenylguanidine ("Perkacit DPG" from Flexsys); (14) N-dicyclohexyl-2-benzothiazolesulfenamide ("Santocure CBS" from Flexsys); (15) N-cyclohexylthiophthalimide ("Vulkalent G" from Lanxess). | | | | |

**[Table 2]**

| | T-0 | T-1 | T-2 | T-3 |
|---|---|---|---|---|
| First rubber composition (FC) | C-0 | C-0 | C-0 | C-0 |
| Second rubber composition (SC) | C-0 | C-1 | C-2 | C-3 |
| Road noise [200~500Hz] (dB) | +0.2 | 0.0 | -0.8 | -0.6 |

## Claims

1. An article intended to come into contact with the ground; and
the article comprising a laminate comprising at least two superposed portions comprising:
- a first portion (FP) made of a first rubber composition (FC); and
- a second portion (SP) made of a second rubber composition (SC), and
the second portion (SP) positioned farther from the ground than the first portion (FP);
wherein the rubber compositions (FC and SC) each is based on at least:
- an elastomer matrix;
- a reinforcing filler;
- a plasticizing agent; and
- a sulfur-based vulcanization accelerator;
wherein the amount in phr of the reinforcing filler in the second rubber composition (SC) is lower than that in the first rubber composition (FC);
wherein the ratio of the amount in phr of the plasticizing agent to the reinforcing filler in the second rubber composition (SC) is higher than that in the first rubber composition (FC); and
wherein the amount in phr of the sulfur-based vulcanization accelerator in the second rubber composition (SC) is lower than that in the first rubber composition (FC).

2. The article according to Claim 1, wherein at least one of the first rubber compositions (FC), the second rubber composition (SC) or combinations thereof is such that the elastomer matrix comprises at least one diene elastomer selected from the group consisting of polybutadienes, polyisoprenes, butadiene copolymers, isoprene copolymers and combinations thereof, preferably wherein the rubber compositions (FC and SC) each is such that the elastomer matrix comprises at least one diene elastomer selected from the group consisting of polybutadienes, polyisoprenes, butadiene copolymers, isoprene copolymers and combinations thereof.

3. The article according to Claim 1 or Claim 2, wherein the second rubber composition (SC) is such that the elastomer matrix comprises at least 50 phr of a polyisoprene(s).

4. The article according to any one of Claims 1 to 3, wherein the second rubber composition (SC) is such that the amount of the reinforcing filler is at most 110 phr.

5. The article according to any one of Claims 1 to 4, wherein the second rubber composition (SC) is such that the amount of the reinforcing filler is at least 15 phr.

6. The article according to any one of Claims 1 to 5, wherein the second rubber composition (SC) is such that the reinforcing filler predominately comprises a reinforcing inorganic filler, preferably wherein the second rubber composition (SC) is such the reinforcing inorganic filler predominately comprises a silica(s).

7. The article according to any one of Claims 1 to 6, wherein the second rubber composition (SC) is such that the ratio of the amount in phr of the plasticizing agent to the reinforcing filler is at least 1.0.

8. The article according to any one of Claims 1 to 7, wherein the second rubber composition (SC) is such that the amount of the plasticizing agent is at least 10 phr.

9. The article according to any one of Claims 1 to 8, wherein the second rubber composition (SC) is such that the plasticizing agent predominately comprises a hydrocarbon resin(s).

10. The article according to any one of Claims 1 to 9, wherein the average glass transition temperature of combination of the elastomer matrix and the plasticizing agent in the second rubber composition (SC) is higher than that in the first rubber composition (FC).

11. The article according to any one of Claims 1 to 10, wherein the second rubber composition (SC) is such that the average glass transition temperature of combination of the elastomer matrix and the plasticizing agent is equal to or higher than -35°C.

12. The article according to any one of Claims 1 to 11, wherein the amount in phr of the sulfur-based vulcanization accelerator in the second rubber composition (SC) is lower than 1.5 phr.

13. The article according to any one of Claims 1 to 12, wherein the rubber compositions (FC and SC) each is based on further sulfur, and wherein the amount in phr of sulfur in the second rubber composition (SC) is lower than that in the first rubber composition (FC).

14. The article according to any one of Claims 1 to 13, wherein the first portion (FP) is intended to come into contact with the ground during the service life of the article, preferably wherein the first portion (FP) and the second portion (SP) are intended to come into contact with the ground during the service life of the article.

15. The article according to any one of Claims 1 to 14, wherein the article is a tire, preferably wherein the laminate is comprised in a tire tread.

## Patentansprüche

1. Artikel, der dazu bestimmt ist, mit dem Boden in Kontakt zu kommen; und
wobei der Artikel ein Laminat umfasst, das mindestens zwei überlagerte Teile umfasst, umfassend:
- einen ersten Teil (FP) aus einer ersten Kautschukzusammensetzung (FC) und
- einen zweiten Teil (SP) aus einer zweiten Kautschukzusammensetzung (SC), und wobei der zweite Teil (SP) weiter vom Boden entfernt angeordnet ist als der erste Teil (FP);
wobei die Kautschukzusammensetzungen (FC und SC) jeweils auf mindestens:
- einer Elastomermatrix;
- einem verstärkenden Füllstoff;
- einem Weichmacher und
- einem auf Schwefel basierenden Vulkanisationsbeschleuniger basiert; wobei die Menge in phr des verstärkenden Füllstoffs in der zweiten Kautschukzusammensetzung (SC) niedriger ist als diejenige in der ersten Kautschukzusammensetzung (FC);
wobei das Verhältnis der Menge in phr des Weichmachers zu dem verstärkenden Füllstoff in der zweiten Kautschukzusammensetzung (SC) höher ist als dasjenige in der ersten Kautschukzusammensetzung (FC); und
wobei die Menge in phr des auf Schwefel basierenden Vulkanisationsbeschleunigers in der zweiten Kautschukzusammensetzung (SC) niedriger ist als diejenige in der ersten Kautschukzusammensetzung (FC).

2. Artikel nach Anspruch 1, wobei mindestens eine der ersten Kautschukzusammensetzung (FC), der zweiten Kautschukzusammensetzung (SC) oder Kombinationen davon so beschaffen ist, dass die Elastomermatrix mindestens ein Dienelastomer umfasst, das aus der Gruppe bestehend aus Polybutadienen, Polyisoprenen, Butadien-Copolymeren, Isopren-Copolymeren und Kombinationen davon ausgewählt ist, wobei die Kautschukzusammensetzungen (FC und SC) vorzugsweise jeweils so beschaffen sind, dass die Elastomermatrix mindestens ein Dienelastomer umfasst, das aus der Gruppe bestehend aus Polybutadienen, Polyisoprenen, Butadien-Copolymeren, Isopren-Copolymeren und Kombinationen davon ausgewählt ist.

3. Artikel nach Anspruch 1 oder Anspruch 2, wobei die zweite Kautschukzusammensetzung (SC) so beschaffen ist, dass die Elastomermatrix mindestens 50 phr eines oder mehrerer Polyisoprene umfasst.

4. Artikel nach einem der Ansprüche 1 bis 3, wobei die zweite Kautschukzusammensetzung (SC) so beschaffen ist, dass die Menge des verstärkenden Füllstoffs höchstens 110 phr beträgt.

5. Artikel nach einem der Ansprüche 1 bis 4, wobei die zweite Kautschukzusammensetzung (SC) so beschaffen ist, dass die Menge des verstärkenden Füllstoffs mindestens 15 phr beträgt.

6. Artikel nach einem der Ansprüche 1 bis 5, wobei die zweite Kautschukzusammensetzung (SC) so beschaffen ist, dass der verstärkende Füllstoff überwiegend einen verstärkenden anorganischen Füllstoff umfasst, wobei die zweite Kautschukzusammensetzung (SC) vorzugsweise so beschaffen ist, dass der verstärkende Füllstoff überwiegend ein oder mehrere Kieselsäuren umfasst.

7. Artikel nach einem der Ansprüche 1 bis 6, wobei die zweite Kautschukzusammensetzung (SC) so beschaffen ist, dass das Verhältnis der Menge in phr des Weichmachers zu dem verstärkenden Füllstoff mindestens 1,0 beträgt.

8. Artikel nach einem der Ansprüche 1 bis 7, wobei die zweite Kautschukzusammensetzung (SC) so beschaffen ist, dass die Menge des Weichmachers mindestens 10 phr beträgt.

9. Artikel nach einem der Ansprüche 1 bis 8, wobei die zweite Kautschukzusammensetzung (SC) so beschaffen ist, dass der Weichmacher überwiegend ein oder mehrere Kohlenwasserstoffharze umfasst.

10. Artikel nach einem der Ansprüche 1 bis 9, wobei die durchschnittliche Glasübergangstemperatur der Kombination der Elastomermatrix mit dem Weichmacher in der zweiten Kautschukzusammensetzung (SC) höher ist als diejenige in der ersten Kautschukzusammensetzung (FC).

11. Artikel nach einem der Ansprüche 1 bis 10, wobei die zweite Kautschukzusammensetzung (SC) so beschaffen ist, dass die durchschnittliche Glasübergangstemperatur der Kombination der Elastomermatrix und des Weichmachers gleich oder größer als -35 °C ist.

12. Artikel nach einem der Ansprüche 1 bis 11, wobei die Menge in phr des auf Schwefel basierenden Vulkanisationsbeschleunigers in der zweiten Kautschukzusammensetzung (SC) kleiner als 1,5 phr ist.

13. Artikel nach einem der Ansprüche 1 bis 12, wobei die Kautschukzusammensetzungen (FC und SC) jeweils auf weiterem Schwefel basieren und wobei die Schwefelmenge in phr in der zweiten Kautschukzusammensetzung (SC) niedriger ist als diejenige in der ersten Gummizusammensetzung (FC).

14. Artikel nach einem der Ansprüche 1 bis 13, wobei der erste Teil (FP) dazu bestimmt ist, während der Nutzungsdauer des Artikels mit dem Boden in Kontakt zu kommen, vorzugsweise wobei der erste Teil (FP) und der zweite Teil (SP) dazu bestimmt sind, während der Nutzungsdauer des Artikels mit dem Boden in Kontakt zu kommen.

15. Artikel nach einem der Ansprüche 1 bis 14, wobei es sich bei dem Artikel um einen Reifen handelt, vorzugsweise wobei das Laminat in einer Reifenlauffläche enthalten ist.

## Revendications

1. Article destiné à venir en contact avec le sol ; et
l'article comprenant un stratifié comprenant au moins deux parties superposées comprenant :
- une première partie (FP) constituée d'une première composition de caoutchouc (FC) ; et
- une seconde partie (SP) constituée d'une seconde composition de caoutchouc (SC), et la seconde partie (SP) étant positionnée plus loin du sol que la première partie (FP) ;
dans lequel les compositions de caoutchouc (FC et SC) sont chacune à base d'au moins :
- une matrice élastomère ;
- une charge renforçante ;
- un agent plastifiant ; et
- un accélérateur de vulcanisation à base de soufre ;
dans lequel la quantité en pce de la charge renforçante dans la seconde composition de caoutchouc (SC) est inférieure à celle dans la première composition de caoutchouc (FC) ;
dans lequel le rapport de la quantité en pce de l'agent plastifiant sur la charge renforçante dans la seconde composition de caoutchouc (SC) est supérieur à celui dans la première composition de caoutchouc (FC) ; et
dans lequel la quantité en pce de l'accélérateur de vulcanisation à base de soufre dans la seconde composition de caoutchouc (SC) est inférieure à celle dans la première composition de caoutchouc (FC).

2. Article selon la revendication 1, dans lequel au moins l'une de la première composition de caoutchouc (FC), la seconde composition de caoutchouc (SC) ou des combinaisons de celles-ci est telle que la matrice élastomère comprend au moins un élastomère diénique choisi dans le groupe constitué par les polybutadiènes, les polyisoprènes, les copolymères de butadiène, les copolymères d'isoprène et leurs combinaisons, de préférence dans lequel les compositions de caoutchouc (FC et SC) sont chacune telles que la matrice élastomère comprend au moins un élastomère diénique choisi dans le groupe constitué par les polybutadiènes, les polyisoprènes, les copolymères de butadiène, les copolymères d'isoprène et leurs combinaisons.

3. Article selon la revendication 1 ou la revendication 2, dans lequel la seconde composition de caoutchouc (SC) est telle que la matrice élastomère comprend au moins 50 pce de polyisoprène(s).

4. Article selon l'une quelconque des revendications 1 à 3, dans lequel la seconde composition de caoutchouc (SC) est telle que la quantité de charge renforçante est d'au plus 110 pce.

5. Article selon l'une quelconque des revendications 1 à 4, dans lequel la seconde composition de caoutchouc (SC) est telle que la quantité de charge renforçante est d'au moins 15 pce.

6. Article selon l'une quelconque des revendications 1 à 5, dans lequel la seconde composition de caoutchouc (SC) est telle que la charge renforçante comprend majoritairement une charge inorganique renforçante, de préférence dans lequel la seconde composition de caoutchouc (SC) est telle que la charge inorganique renforçante comprend majoritairement une ou plusieurs silice(s).

7. Article selon l'une quelconque des revendications 1 à 6, dans lequel la seconde composition de caoutchouc (SC) est telle que le rapport de la quantité en pce de l'agent plastifiant sur la charge renforçante est d'au moins 1,0.

8. Article selon l'une quelconque des revendications 1 à 7, dans lequel la seconde composition de caoutchouc (SC) est telle que la quantité de l'agent plastifiant est d'au moins 10 pce.

9. Article selon l'une quelconque des revendications 1 à 8, dans lequel la seconde composition de caoutchouc (SC) est telle que l'agent plastifiant comprend majoritairement une ou plusieurs résines hydrocarbonées.

10. Article selon l'une quelconque des revendications 1 à 9, dans lequel la température de transition vitreuse moyenne de la combinaison de la matrice élastomère et de l'agent plastifiant dans la seconde composition de caoutchouc (SC) est supérieure à celle dans la première composition de caoutchouc (FC).

11. Article selon l'une quelconque des revendications 1 à 10, dans lequel la seconde composition de caoutchouc (SC) est telle que la température moyenne de transition vitreuse de la combinaison de la matrice élastomère et de l'agent plastifiant est égale ou supérieure à -35°C.

12. Article selon l'une quelconque des revendications 1 à 11, dans lequel la quantité en pce de l'accélérateur de vulcanisation à base de soufre dans la seconde composition de caoutchouc (SC) est inférieure à 1,5 pce.

13. Article selon l'une quelconque des revendications 1 à 12, dans lequel les compositions de caoutchouc (FC et SC) sont chacune à base de soufre supplémentaire, et dans lequel la quantité en pce de soufre dans la seconde composition de caoutchouc (SC) est inférieure à celle dans la première composition de caoutchouc (FC).

14. Article selon l'une quelconque des revendications 1 à 13, dans lequel la première partie (FP) est destinée à entrer en contact avec le sol pendant la durée de vie de l'article, de préférence dans lequel la première partie (FP) et la seconde partie (SP) sont destinées à entrer en contact avec le sol pendant la durée de vie de l'article.

15. Article selon l'une quelconque des revendications 1 à 14, dans lequel l'article est un pneu, de préférence dans lequel le stratifié est compris dans une bande de roulement de pneu.
